# EUROPEAN PATENT APPLICATION

(11) **EP 4 822 435 A1**
(43) Date of publication of application: **14.10.2026**
(21) Application number: 24900450.8
(22) Date of filing: 22.11.2024
(51) Int. Cl.: G02F 1/39

(54) **QUANTUM ENTANGLED PHOTON PAIR GENERATION DEVICE**

(30) Priority: 04.12.2023 JP 2023204598
(71) Applicant: Lquom, Inc., Yokohama-shi, Kanagawa 240-0067 (JP)
(72) Inventor: NIIZEKI, Kazuya, Yokohama-shi, Kanagawa 240-0067 (JP)
(74) Representative: Meissner Bolte Partnerschaft mbB
(86) International application number: PCT/JP2024/041369
(87) International publication number: WO 2025/121155

(57) **Abstract**

A quantum entangled photon pair generation device (1) includes: a resonance section (11) that has a loop-shaped first optical path and a generation element which is arranged on the first optical path and which generates a two-photon state; an interference section (12) that has a loop-shaped second optical path and an input/output section which is arranged on the second optical path, which receives pump light, and which outputs a quantum entangled photon pair and that generates one or more photon pairs in a quantum entangled state from a plurality of two-photon states generated by the generation element; and a shared connection section (E2) that forms a loop-shaped optical path for each of the first optical path and the second optical path and that optically connects the first optical path and the second optical path.

## Description

### Technical Field

The present invention relates to a quantum entangled photon pair generation device that generates a quantum entangled photon pair.

### Background Art

In a quantum communication system using quantum entanglement, in order for a quantum memory to suitably absorb quantum entangled photons (entangled photons) generated by a quantum entangled light source (entanglement light source), it is important to generate entangled photons having a narrow spectral linewidth. Further, a spectroscopic system makes it possible to enhance a signal by generating entangled photons with high generation brightness.

In a quantum entangled light source that is for long-distance quantum communication and that is disclosed in Patent Literature 1, entangled photons are emitted by causing the entangled photons to circulate in a resonator. This makes it possible to generate entangled photons having a spectral linewidth of not more than a predetermined value.

### Citation List

### [Patent Literature]

[Patent Literature 1]
Japanese Patent Application Publication Tokukai No. 2019-035892

### [Non-patent Literature]

[Non-patent Literature 1]
   K. Niizeki et al. "Two-photon comb with wavelength conversion and 20-km distribution for quantum communication", Nature Communication Physics, vol. 3, 138 (2020).
[Non-patent Literature 2]
   F. Steinlechner et al. "Efficient heralding of polarization-entangled photons from type-0 and type-II spontaneous parametric downconversion in periodically poled KTiOPO4", Journal of Optical Society of America B 31, No. 9, pp. 2068-2076 (2014).
[Non-patent Literature 3]
   J. Wang et al. "Universal photonic quantum interface for a quantum network," Physical review applied, vol. 10, 054036 (2018).

### Summary of Invention

### Technical Problem

However, a conventional configuration has a problem in that it is difficult to improve generation brightness of quantum entangled light for reasons described in detail below. Note here that generation brightness (also referred to as spectral brightness) of quantum entangled light in the present application is defined as follows. Specifically, generation brightness (spectral brightness) is defined as a generation probability of quantum entangled light per unit optical frequency and as including loss that occurs in a case where the quantum entangled light is externally output for practical use. Low generation brightness increases an influence of dark counts derived from a detector. This causes a problem in that a longer time is required to obtain a sufficient signal and success probability of communication decreases.

An aspect of the present invention has been made in view of the above problem, and has an object to improve generation brightness of quantum entangled light.

### Solution to Problem

In order to attain the object, a quantum entangled photon pair generation device according to an aspect of the present invention includes: a resonance section that has a loop-shaped first optical path and a generation element which is arranged on the first optical path and which generates a two-photon state; an interference section that has a loop-shaped second optical path and an input/output section which is arranged on the second optical path, which receives pump light, and which outputs a quantum entangled photon pair and that generates one or more photon pairs in a quantum entangled state from a plurality of two-photon states generated by the generation element; and a shared connection section that forms a loop-shaped optical path for each of the first optical path and the second optical path and that optically connects the first optical path and the second optical path.

Further, the quantum entangled photon pair generation device according to an aspect of the present invention is characterized in that in the resonance section, the plurality of two-photon states generated by the generation element satisfy a resonance condition in the resonance section.

### Advantageous Effects of Invention

An aspect of the present invention makes it possible to improve generation brightness of quantum entangled light.

### Brief Description of Drawings

Fig. 1 is a diagram showing a configuration of a quantum entangled photon pair generation device according to Embodiment 1 of the present invention.
Fig. 2 is a diagram showing Specific Configuration Example 1 of the quantum entangled photon pair generation device according to Embodiment 1 of the present invention.
Fig. 3 is a diagram showing a variation of Specific Configuration Example 2 of the quantum entangled photon pair generation device according to Embodiment 1 of the present invention.
Fig. 4 is a diagram showing a second variation of Specific Configuration Example 2 of the quantum entangled photon pair generation device according to Embodiment 1 of the present invention.
Fig. 5 is a diagram showing Specific Configuration Example 3 of the quantum entangled photon pair generation device according to Embodiment 1 of the present invention.
Fig. 6 is a diagram showing Specific Configuration Example 4 of the quantum entangled photon pair generation device according to Embodiment 1 of the present invention.
Fig. 7 is a diagram showing Specific Configuration Example 5 of the quantum entangled photon pair generation device according to Embodiment 1 of the present invention.
Fig. 8 is a diagram showing Specific Configuration Example 6 of the quantum entangled photon pair generation device according to Embodiment 1 of the present invention.
Fig. 9 is a diagram showing Specific Configuration Example 7 of the quantum entangled photon pair generation device according to Embodiment 1 of the present invention.
Fig. 10 is a diagram showing Specific Configuration Example 8 of the quantum entangled photon pair generation device according to Embodiment 1 of the present invention.
Fig. 11 is a diagram showing Specific Configuration Example 9 of the quantum entangled photon pair generation device according to Embodiment 1 of the present invention.

### Description of Embodiments

### Embodiment 1

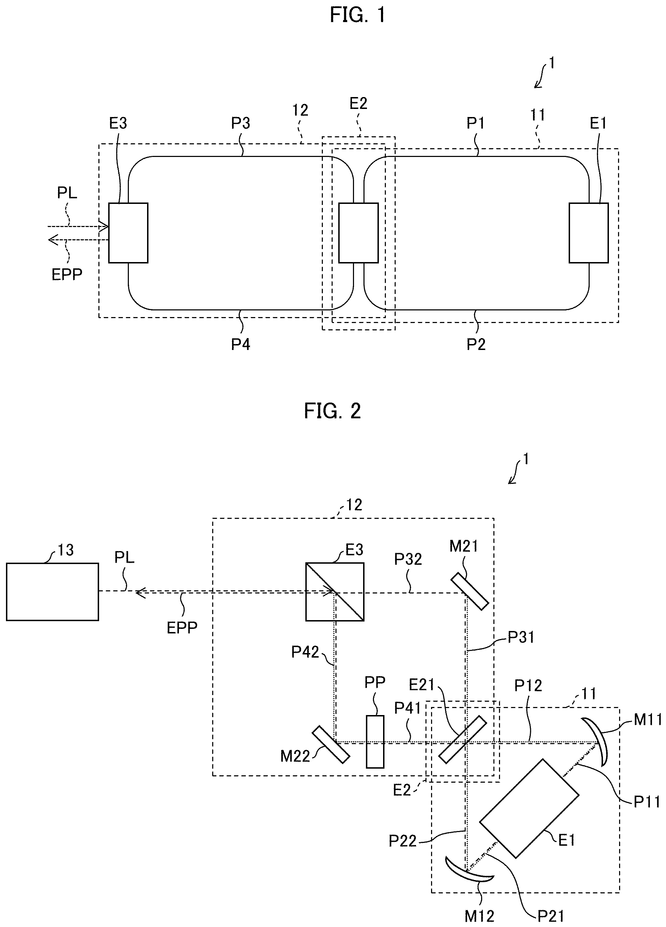

An embodiment of the present invention will be described below in detail. Fig. 1 is a diagram showing a configuration of a quantum entangled photon pair generation device 1 according to the present embodiment. The quantum entangled photon pair generation device 1 is, for example, a generation device that generates a photon pair composed of two photons which are in a relationship of quantum entanglement with each other. The quantum entangled photon pair generation device 1 can also be simply referred to as a quantum entangled light generation device, a quantum entangled light emitting device, a quantum entangled light source, a quantum light source, an entanglement light source, or the like.

The quantum entangled photon pair generation device 1 can be used, for example, in a quantum communication system that carries out communication with use of photons in a quantum entangled state, but such use does not limit the present embodiment.

### (Configuration of quantum entangled photon pair generation device)

A configuration of the quantum entangled photon pair generation device 1 according to the present embodiment will be described below more specifically. Fig. 1 is a diagram showing a configuration of the quantum entangled photon pair generation device 1 according to the present embodiment. As shown in Fig. 1, the quantum entangled photon pair generation device 1 includes a resonance section 11, an interference section 12, and a shared connection section E2.

### (Resonance section)

As shown in Fig. 1, the resonance section 11 has an optical path P1, an optical path P2, a generation element E1, and the shared connection section E2. As shown in Fig. 1, a loop-shaped optical path is formed by the shared connection section E2 optically connecting respective one ends of the optical path P1 and the optical path P2. Note here that the loop-shaped optical path which is composed of the optical path P1 and the optical path P2 is also sometimes referred to as a first optical path. A specific configuration example of the first optical path does not limit the present embodiment, and examples thereof include the following: an optical path in vacuum or air which optical path is configured in a loop shape by a plurality of mirrors; and an optical path in one or more fibers which optical path is configured in a loop shape by the one or more fibers.

The generation element E1 is a generation element that is arranged on the first optical path, and is, for example, an optical generation element that generates a two-photon state. A specific configuration of the generation element E1 does not limit the present embodiment and can be achieved, for example, by any of the following: a nonlinear optical medium (such as a nonlinear optical crystal) that causes second-order spontaneous parametric down-conversion; an optical fiber that causes a four-wave mixing process; an optical fiber that causes third-order spontaneous parametric down-conversion; and the like.

### (Interference section)

The interference section 12 is configured to generate one or more photon pairs in a quantum entangled state from a plurality of two-photon states generated by the generation element E1.

As shown in Fig. 1, the interference section 12 includes an optical path P3, and an optical path P4, the shared connection section E2, and an input/output section E3. As shown in Fig. 1, a loop-shaped optical path is formed by the shared connection section E2 optically connecting respective one ends of the optical path P3 and the optical path P4. Note here that the loop-shaped optical path which is composed of the optical path P3 and the optical path P4 is also sometimes referred to as a second optical path. A specific configuration example of the second optical path does not limit the present embodiment, and examples thereof include the following: an optical path in vacuum or air which optical path is configured in a loop shape by a plurality of mirrors; and an optical path in one or more fibers which optical path is configured in a loop shape by the one or more fibers.

The input/output section E3 is arranged on the second optical path and has a configuration for causing pump light PL generated by a pump light generation device (not shown) to flow into the second optical path and for emitting a quantum entangled photon pair from the interference section 12. A specific configuration of the input/output section E3 does not limit the present embodiment and can be achieved, for example, by any of the following: a beam splitter; a polarization beam splitter; a polarization-splitting fiber coupler; and the like. The input/output section E3 splits the pump light PL into two beams, directs one of the split beams to circulate clockwise in the second optical path, and directs the other of the split beams to circulate counterclockwise in the second optical path.

As described later, in the second optical path of the interference section 12, a portion of light propagates clockwise, and another portion of the light propagates counterclockwise. The portion of the light and the another portion of the light are combined by the input/output section E3 and are output from the input/output section E3. Thus, each or some of configurations of the interference section 12 can be expressed as constituting a Sagnac interferometer or a Sagnac interference device. Further, the quantum entangled photon pair generation device 1 according to the present embodiment can be expressed as having a configuration that achieves both a Sagnac interference device (interference section 12) and a resonator (resonance section 11), which are conventionally difficult to achieve at the same time. However, such expressions do not limit the present embodiment.

### (Shared connection section)

The shared connection section E2 is configured to form a loop-shaped optical path for each of the first optical path and the second optical path and optically connect the first optical path and the second optical path, and is shared by the resonance section 11 and the interference section 12 as described earlier. A specific configuration of the shared connection section E2 does not limit the present embodiment and can be achieved, for example, by including any of the following: a dichroic mirror; a polarization-maintaining fiber coupler; and the like. The shared connection section E2 has, for example, reflectance and transmittance for optically coupling the interference section 12 to the resonance section 11.

### (Operation of quantum entangled photon pair generation device)

An operation of the quantum entangled photon pair generation device 1 will be described below. First, the pump light (pump laser) PL that has been generated by a pump light generation device (not shown) is incident on the input/output section E3 as shown in Fig. 1. The incident pump light is split into two beams by the input/output section E3. One of the split beams circulates clockwise in the second optical path that is composed of the optical path P3 and the optical path P4, and the other of the split beams circulates counterclockwise in the second optical path.

At least part of light that circulates in the second optical path of the interference section 12 flows into the resonance section 11 through the shared connection section E2. The light that has flowed into the resonance section 11 circulates in the first optical path that is composed of the optical path P1 and the optical path P2. For example, part of light that has circulated clockwise in the second optical path of the interference section 12 flows into the first optical path of the resonance section 11 through the shared connection section E2 and circulates counterclockwise in the first optical path. Part of light that has circulated counterclockwise in the second optical path of the interference section 12 flows into the first optical path of the resonance section 11 through the shared connection section E2 and circulates clockwise in the first optical path.

Light that circulates in the first optical path is incident on the generation element E1. A one-photon state constituting at least part of the light incident on the generation element E1 is converted into a two-photon state, for example by spontaneous parametric down-conversion caused by the generation element E1. In other words, the generation element E1 generates a two-photon state from a one-photon state (pump photon) constituting at least part of the light that circulates in the first optical path.

Including, as the shared connection section E2, a dichroic mirror that transmits the pump light PL and that reflects the two-photon state makes it possible to establish a resonance process for the two-photon state in the resonance section 11 even without causing the resonance section 11 to resonate the pump light PL. Note, however, that a specific configuration of the shared connection section E2 does not limit the present embodiment, as described earlier.

The resonance process in the resonance section 11 is determined by a wavelength and/or polarization of a two-photon state that circulates in the resonance section 11, independently of configuration requirements of the interference section 12 or a phase-matching condition in the generation element E1. In contrast, as described in detail later, even in the case of a two-photon state generated under a phase-matching condition under which the same polarization circulates in the resonance section 11, a polarization-entangled state in which two-photon states that have mutually orthogonal polarizations are in an entangled state can be generated by action of the interference section 12.

The two-photon state that has been generated by the generation element E1 flows into the interference section 12 through the shared connection section E2 and reaches the input/output section E3 via the second optical path. More specifically, for example, part of a two-photon state that propagates clockwise in the first optical path of the resonance section 11 flows into the interference section 12 through the shared connection section E2, propagates counterclockwise in the second optical path of the interference section 12, and reaches the input/output section E3. Part of a two-photon state that propagates counterclockwise in the first optical path of the resonance section 11 flows into the interference section 12 through the shared connection section E2, propagates clockwise in the first optical path of the interference section 12, and reaches the input/output section E3.

By combining the two-photon state that has propagated clockwise in the first optical path and the two-photon state that has propagated counterclockwise in the first optical path, the input/output section E3 generates a quantum entangled photon pair EPP that is composed of two photons in a relationship of quantum entanglement. The generated quantum entangled photon pair EPP is output to outside of the interference section 12 through the input/output section E3. The output quantum entangled photon pair EPP is guided by an optical path (not shown) and is used, for example, in a quantum communication system.

The interference section 12 which is configured to include an adjusted polarization rotation element on the optical path P3 and/or the optical path P4 makes it possible to more suitably generate the quantum entangled photon pair in the input/output section E3. Note, however, that such a configuration does not limit the present embodiment.

### (Description of effects)

Effects exhibited by the quantum entangled photon pair generation device 1 of an aspect of the present invention will be described below. In order to describe the effects, a configuration according to a comparative example, which configuration is a conventional configuration, will be described first.

The following comparative examples can be considered as configurations for generating quantum entangled light, but the configurations according to all the comparative examples have a problem in that it is difficult to improve generation brightness of quantum entangled light.

### (Comparative Example 1)

Non-patent Literature 1 discloses a method of generating entanglement by arranging two optical crystals in series with use of a periodically poled lithium niobate crystal that satisfies a Type-0 phase-matching condition under which two photons with the same polarization can be generated. In the method, with respect to one component (one photon) of pump light, it is possible to generate two photons in one of the crystals, whereas it is impossible to generate any photon in the other of the crystals. Thus, by an amount corresponding to the crystal in which it is impossible to generate any photon, loss in a resonator increases, and finesse decreases, so that an enhancement effect in the resonator decreases. Thus, the configuration according to Comparative Example 1 makes it difficult to improve generation brightness of quantum entangled light.

### (Comparative Example 2)

Non-patent Literature 2 discloses a method of generating quantum entangled light with use of a single crystal and a so-called Type-II phase-matching condition. In a method using Type-II, a nonlinear optical constant itself that determines generation brightness of the entire phase-matching cone is lower than in Type-0 or Type-I in the first place, and further, entanglement is achieved by spatially extracting part of the cone. This increases loss and results in a decrease in generation rate. Thus, the configuration according to Comparative Example 2 makes it difficult to improve generation brightness of quantum entangled light.

### (Comparative Example 3)

Non-patent Literature 3 discloses a method of improving generation brightness by using a configuration for coupling with a resonator or forming a resonator. Meanwhile, in the configuration disclosed in Non-patent Literature 3, a case where narrow-linewidth quantum entangled light is generated makes it necessary to control an operating temperature of a nonlinear optical crystal, a pump light wavelength, and a quantum entangled light wavelength with high accuracy. Particularly in a case where two-photon wavelengths are non-degenerate, this problem is a problem in that a condition for quadruple resonance must be searched for. This causes a problem in that a driving condition is complicated, and an additional optical component for satisfying the driving condition is required, so that loss increases and generation brightness decreases.

### (Effects of quantum entangled photon pair generation device 1)

In contrast, according to the quantum entangled photon pair generation device 1 of the present embodiment, the resonance process in the resonance section 11 is determined by a wavelength and/or polarization of the two-photon state that circulates in the resonance section 11, and is independent of the configuration requirements of the interference section 12 or the phase-matching condition in the generation element E1.

Further, as described earlier, the resonance section 11 of the quantum entangled photon pair generation device 1 has the loop-shaped first optical path that is composed of the optical path P1, the optical path P2, and the generation element E1. This makes it possible to, while preventing or reducing any loss, achieve both the resonance process carried out by the resonance section 11 and generation of quantum entangled light by the interference section 12. In addition, according to the quantum entangled photon pair generation device 1, it is only necessary for a wavelength of a generated two-photon state to satisfy a resonance condition for a specific polarization. That is, it is unnecessary to establish quadruple resonance of polarization and wavelength, which is required in a conventional method, or quintuple resonance including a pump laser.

In general, increasing a crystal length in a resonator increases an influence of wavelength dispersion. This greatly changes an effective resonator length that depends on two-photon wavelengths. In spontaneous parametric down-conversion, which is a mechanism of two-photon generation, it is necessary that not only restriction of a phase-matching wavelength width by a long crystal length but also an energy conservation law which is calculated from a wavelength be established. This causes a cluster effect in which the number of resonant wavelength modes is actively filtered. The quantum entangled photon pair generation device 1 according to the present embodiment makes it possible to reduce loss in a resonator by approximately half as compared with an entanglement generation method in which two optical crystals are arranged. This makes it possible to both reduce the number of modes and achieve increased brightness.

Thus, the quantum entangled photon pair generation device 1 according to the present embodiment makes it possible to further improve generation brightness of quantum entangled light than a conventional configuration.

### (Specific Configuration Example 1 of quantum entangled photon pair generation device 1)

A more specific configuration example (Configuration Example 1) of the quantum entangled photon pair generation device 1 will be described below with reference to Fig. 2. For convenience of description, members having the same functions as members already described are respectively given the same reference signs, and a description of those members will be omitted as appropriate.

Fig. 2 is a diagram showing a configuration of Specific Configuration Example 1 of the quantum entangled photon pair generation device 1 according to the present configuration example. As shown in Fig. 2, the quantum entangled photon pair generation device 1 according to the present configuration example includes the resonance section 11, the interference section 12, and a pump light generation device 13.

### (Resonance section 11)

The resonance section 11 is configured to resonate light that propagates in the resonator. As shown in Fig. 2, the resonance section 11 includes an optical path P11, an optical path P12, an optical path P21, an optical path P22, a mirror M11, a mirror M12, the generation element E1, and the shared connection section E2.

The optical path P11 is an optical path that is formed between the generation element E1 and the mirror M11. The optical path P12 is an optical path that is formed between the mirror M11 and the shared connection section E2. The optical path P21 is an optical path that is formed between the generation element E1 and the mirror M12. The optical path P22 is an optical path that is formed between the mirror M12 and the shared connection section E2. The optical path P11, the optical path P12, and the mirror M11 form the optical path P1, and the optical path P21, the optical path P22, and a mirror M21 form the optical path P2. As a result, the optical path P11, the optical path P12, the optical path P21, the optical path P22, the mirror M11, the mirror M12, the generation element E1, and the shared connection section E2 form a loop-shaped first optical path. As described later, the resonance section 11 may be configured to include, in addition to the mirror M11 and the mirror M12, one or more other mirrors for forming the loop-shaped first optical path. In such a case, an effect of increasing a resonator length can also be expected as described later.

The generation element E1 is a generation element that is arranged on the first optical path. In the present configuration example, the generation element E1 is composed of one nonlinear optical medium (such as one nonlinear optical crystal) that causes spontaneous parametric down-conversion. Note here that the generation element E1 may have any phase-matching condition and any combination of two-photon wavelengths. This makes it possible to suitably reduce internal loss in the resonance section 11.

The mirror M11 and the mirror M21 have a configuration for, in order for the first optical path to be a loop-shaped optical path, directing light that propagates in the first optical path. The mirror M11 and/or the mirror M21 may be, for example, a concave mirror(s). Using a concave mirror(s) as the mirror M11 and/or the mirror M21 makes it possible to suitably reduce loss in the resonance section 11.

The mirror M11 and/or the mirror M21 may be a toroidal-shaped mirror(s) whose curvature differs by the square of (cosθ) between a horizontal direction and a vertical direction. Adopting such a configuration makes it possible to prevent or reduce an aberration caused by a non-zero angle of incidence θ, and to make a shape of an emitted beam closer to a true circle.

The first optical path of the resonance section 11 may be configured to further include one or more lenses as a mechanism for focusing a light beam onto, for example, the mirror M11, the mirror M12, the generation element E1, and a dichroic mirror.

A length of the resonance section 11 (more specifically, a length of the first optical path of the resonance section 11) can be suitably determined in accordance with, for example, a required linewidth, the required number of frequency modes, and a required mode interval. Even in the case of non-degenerate wavelength, quadruple resonance of dual-polarization and dual-wavelength is not required, and double resonance at two wavelengths need only be satisfied.

### (Interference section 12)

The interference section 12 is configured to supply the generation element E1 with pump light for generating a desired two-photon state, and to generate and output one or more photon pairs in a quantum entangled state from a plurality of two-photon states generated by the generation element E1. As shown in Fig. 2, the interference section 12 includes an optical path P31, an optical path P32, an optical path P41, an optical path P42, the mirror M21, a mirror M22, a polarization rotation element PP, the shared connection section E2, and the input/output section E3.

The optical path P31 is an optical path that is formed between the shared connection section E2 and the mirror M21. The optical path P32 is an optical path that is formed between the mirror M21 and the input/output section E3. The optical path P41 is an optical path that is formed between the shared connection section E2 and the mirror M22. The optical path P42 is an optical path that is formed between the mirror M22 and the input/output section E3. The optical path P31, the optical path P32, the optical path P41, the optical path P42, the mirror M21, the mirror M22, the input/output section E3, and the shared connection section E2 form a loop-shaped second optical path. The interference section 12 may be configured to include, in addition to the mirror M21 and the mirror M22, one or more other mirrors for forming the loop-shaped second optical path, and the other mirrors are a design matter.

The polarization rotation element PP is an optical element that is arranged on the second optical path, and rotates polarization of light that propagates in the second optical path. A specific configuration of the polarization rotation element PP does not limit the present configuration example. For example, the polarization rotation element PP can be configured to include any of a retardation plate, a Fresnel rhomb, and a periscope structure accompanied by three-dimensional reflection. In a case where a configuration including a periscope structure is adopted, the polarization rotation element PP and the mirror M22 can be integrated. In other words, the periscope structure makes it possible to integrate a polarization rotation function and a ray angle shift function. Furthermore, the configuration eliminates the need for refractive index adjustment in the polarization rotation element and thus is inexpensive.

The interference section 12 including the polarization rotation element PP makes it possible to associate a clockwise path (propagation path) and a counterclockwise path (propagation path) in the second optical path with a polarization state of a photon. Thus, a direction in which a photon has been output from the second optical path can be encoded as polarization of the photon. Furthermore, in the present configuration example, respective perimeters of the clockwise path and the counterclockwise path in the second optical path are equal, and thus a relative phase in a generated quantum entangled photon pair can be automatically stabilized.

The input/output section E3 has a configuration for causing pump light PL that is generated by the pump light generation device 13 to flow into the second optical path and for emitting a quantum entangled photon pair from the interference section 12. In the present configuration example, the input/output section E3 is composed of a beam splitter or a polarization beam splitter. The following description assumes that the input/output section E3 is a polarization beam splitter. The input/output section E3 splits the pump light PL into two beams, directs one of the split beams to circulate clockwise in the second optical path, and directs the other of the split beams to circulate counterclockwise in the second optical path.

The input/output section E3 also combines a two-photon state that propagates clockwise in the second optical path and a two-photon state that propagates counterclockwise in the second optical path, and emits the combined two-photon states as polarization-entangled light (a polarized quantum entangled photon pair) in one direction.

### (Shared connection section)

The shared connection section E2 is configured to optically connect the first optical path and the second optical path, and is shared by the resonance section 11 and the interference section 12 as described earlier. In the present Configuration Example 1, the shared connection section E2 is composed of a dichroic mirror E21. Note here that the dichroic mirror has reflectance and transmittance for optically coupling the interference section 12 to the resonance section 11. In the dichroic mirror, including a dichroic mirror that transmits the pump light PL and that reflects the two-photon state makes it possible to establish the resonance process in the resonance section 11 for the two-photon state without causing the resonance section 11 to resonate the pump light PL, as described earlier. In the example shown in Fig. 2, pump light beams that have been input from the optical paths P31 and P41 are transmitted to the respective optical paths P22 and P12. Most of two-photon states that have been input from the optical paths P12 and P22 are reflected to the respective optical paths P22 and P12, and some of the two-photon states flow into the respective optical paths P41 and P31.

In the present configuration example, regarding reflectance with respect to a two-photon state, the dichroic mirror E21 constituting the shared connection section E2 desirably has a reflectance (for example, 95%) smaller than a reflectance (for example, 99%) of the mirror M11 and the mirror M12 of the resonance section 11 described earlier. In other words, the resonance section 11 described earlier desirably includes the plurality of mirrors M11 and M12 that are for forming the first optical path and that have a relatively higher reflectance than the dichroic mirror. Adopting such a configuration makes it easier for light from the resonance section 11 to flow into the interference section 12. This makes it possible to suitably improve generation brightness of a quantum entangled photon pair generated by the interference section 12. The above setting of the reflectance of each of the mirrors, etc. is a design matter, and effects of the present invention can be obtained regardless of the above numerical conditions.

### (Description of operation and photon state of quantum entangled photon pair generation device 1 according to Configuration Example 1)

An operation and a photon state of the quantum entangled photon pair generation device 1 according to the present configuration example will be described below. First, the pump light (pump laser) PL that has been generated by the pump light generation device 13 is incident on the input/output section E3 as shown in Fig. 2. The incident pump light is split into two beams by the input/output section E3. One of the split beams circulates clockwise in the second optical path that is composed of the optical path P31, the optical path P32, the optical path P41, and the optical path P42, and the other of the split beams circulates counterclockwise in the second optical path.

Immediately after being separated by the polarization beam splitter (input/output section E3), the pump light (photons of the pump laser) is represented, for example, by the following state: ${\left|ψ\right〉}_{pump , PBS} = \left({\left|H\right〉}_{clock}+{\left|V\right〉}_{anticlock}\right) / \sqrt{2}$ where on the right-hand side, "H" indicates that the state is horizontal polarization, and "V" indicates that the state is vertical polarization. Further, on the right-hand side, the subscript "clock" indicates that the state propagates clockwise in the second optical path, and the subscript "anticlock" indicates that the state propagates counterclockwise in the second optical path.

Subsequently, after a photon state |V>_{anticlock} passes through the polarization rotation element PP, immediately before the shared connection section E2, the photons of the pump laser are represented by the following state: ${\left|ψ\right〉}_{pump , commonmirror} = \left({\left|H\right〉}_{clock}+{e}^{{iθ}_{1}}{\left|H\right〉}_{anticlock}\right) / \sqrt{2}$ where θ₁ (θ with subscript 1) is a relative phase that is imparted in a counterclockwise path relative to a clockwise path by the polarization rotation element PP.

At least part of light that circulates in the second optical path of the interference section 12 flows into the resonance section 11 through the shared connection section E2. The light that has flowed into the resonance section 11 circulates in the first optical path that is composed of the optical path P1 and the optical path P2. Then, the light that circulates in the first optical path is incident on the generation element E1. A one-photon state constituting at least part of the light incident on the generation element E1 is, for example, converted into a two-photon state by spontaneous parametric down-conversion caused by the generation element E1. In other words, the generation element E1 generates a two-photon state from a one-photon state constituting at least part of the light that circulates in the first optical path.

In a case where a perimeter of the first optical path in the resonance section 11 is denoted as L_cav and a coordinate at which spontaneous parametric down-conversion occurs is denoted as z, the photons of the pump laser at the position z are represented by the following state: ${\left|ψ\right〉}_{pump , SPDC} = \left({e}^{ikz}{\left|H\right〉}_{clock}+{e}^{ik \left({L}_{cav}-z\right)}{e}^{{iθ}_{1}}{\left|H\right〉}_{anticlock}\right) / \sqrt{2}$ where k indicates a wave number of the pump laser.

The two-photon state that has been generated by the generation element E1 flows into the interference section 12 through the shared connection section E2. In a case where a two-photon state of |H'H'> is assumed to have been generated from |H> by parametric down-conversion by the generation element E1, and a wave number of two photons of the two-photon state is denoted as k', immediately before a shared mirror (shared connection section E2), light in the two-photon state is represented by the following state: ${\left|ψ′\right〉}_{twophoton} = \left({e}^{ik ′ \left({L}_{cav}-z\right)}{e}^{ikz}{\left|H′H′\right〉}_{clock}+{e}^{ik ′ z}{e}^{ik \left({L}_{cav}-z\right)}{e}^{{iθ}_{1}}{\left|H′H′\right〉}_{anticlock}\right) / \sqrt{2}$

Note that the state remains the same even in a case where photons after circulation are superposed in consideration of a resonance condition in the resonance section 11 (however, loss has been ignored).

Light that has passed through the shared connection section E2 reaches the input/output section E3 via the second optical path of the interference section 12.

Note here that a two-photon state |H'H'>_{clock} that has flowed into the interference section 12 is converted into |V'V'>_{clock} by the polarization rotation element PP. By combining (i) a two-photon state |V'V'>_{clock} that has propagated clockwise in the first optical path and that has undergone polarization rotation by the polarization rotation element PP and (ii) a two-photon state |H'H'>_{anticlock} that has propagated counterclockwise in the first optical path, the input/output section E3 generates a quantum entangled photon pair EPP that is composed of two photons in a relationship of quantum entanglement with each other, and outputs the generated quantum entangled photon pair to outside of the interference section 12. The output quantum entangled photon pair EPP is guided by an optical path (not shown) and is used, for example, in a quantum communication system.

Note here that two-photon states EPP combined by the input/output section E3 are represented, for example, as follows: ${\left|ψ′\right〉}_{entanglement} = \left({e}^{{iθ}_{2}}{e}^{ik ′ \left({L}_{cav}-z\right)}{e}^{ikz}{\left|V′V′\right〉}_{clock}+{e}^{ik ′ z}{e}^{ik \left({L}_{cav}-z\right)}{e}^{{iθ}_{1}}{\left|H′H′\right〉}_{anticlock}\right) / \sqrt{2}$ where θ₂ (θ with subscript 2) indicates a relative phase that is imparted in the clockwise path relative to the counterclockwise path in the second optical path. In the interference section 12, the clockwise path and the counterclockwise path in the second optical path are paths on the same optical path, and thus these two paths cannot be distinguished. Thus, the above two-photon states EPP combined by the input/output section E3 are in a photon state indicating a photon pair that is composed of two photons in a relationship of quantum entanglement with each other.

### (Effects of quantum entangled photon pair generation device 1 according to Configuration Example 1)

According to the quantum entangled photon pair generation device 1 according to the present configuration example, the resonance process in the resonance section 11 is determined by a wavelength and/or polarization of the two-photon state that circulates in the resonance section 11, and is independent of the configuration requirements of the interference section 12 or the phase-matching condition in the generation element E1. Thus, without greatly readjusting the resonance section, it is possible to change a two-photon wavelength or improve a degree of entanglement while maintaining the phase-matching condition in the generation element E1.

Further, as described earlier, the resonance section 11 of the quantum entangled photon pair generation device 1 has the loop-shaped first optical path that is composed of the optical path P1, the optical path P2, and the generation element E1. This makes it possible to, while preventing or reducing any loss, achieve both the resonance process carried out by the resonance section 11 and generation of quantum entangled light by the interference section 12. In addition, according to the quantum entangled photon pair generation device 1, it is only necessary for a wavelength of a generated two-photon state to satisfy a resonance condition for a specific polarization. That is, it is unnecessary to satisfy quadruple resonance of polarization and wavelength, which is required in a conventional method, or quintuple resonance including a pump laser.

A resonance condition/non-resonance condition (for the pump laser) in the resonance section 11 of the quantum entangled photon pair generation device 1 can be achieved by suitably designing the resonance section 11 accordingly even in a case where the pump laser and a wavelength of a two-photon state greatly change, or two photons have different wavelengths, namely, are in a so-called non-degenerate state. That is, the effects of the present invention can be obtained for any combination of a pump laser and a wavelength of a two-photon state by suitably designing the resonance section 11 and suitably selecting the generation element E1 in accordance with a pump laser and a wavelength of a two-photon state.

In general, increasing a crystal length in a resonator increases an influence of wavelength dispersion. This greatly changes an effective resonator length that depends on two-photon wavelengths. In spontaneous parametric down-conversion, which is a mechanism of two-photon generation, it is necessary that not only restriction of a phase-matching wavelength width by a long crystal length but also an energy conservation law which is calculated from a wavelength be established. This causes a cluster effect in which the number of resonant wavelength modes is actively filtered. The quantum entangled photon pair generation device 1 according to the present configuration example makes it possible to reduce loss in a resonator by approximately half as compared with an entanglement generation method in which two optical crystals are arranged. This makes it possible to both reduce the number of modes and achieve increased brightness.

Thus, the quantum entangled photon pair generation device 1 according to the present configuration example makes it possible to further improve generation brightness of quantum entangled light than a conventional configuration.

### (Specific Configuration Example 2 of quantum entangled photon pair generation device 1)

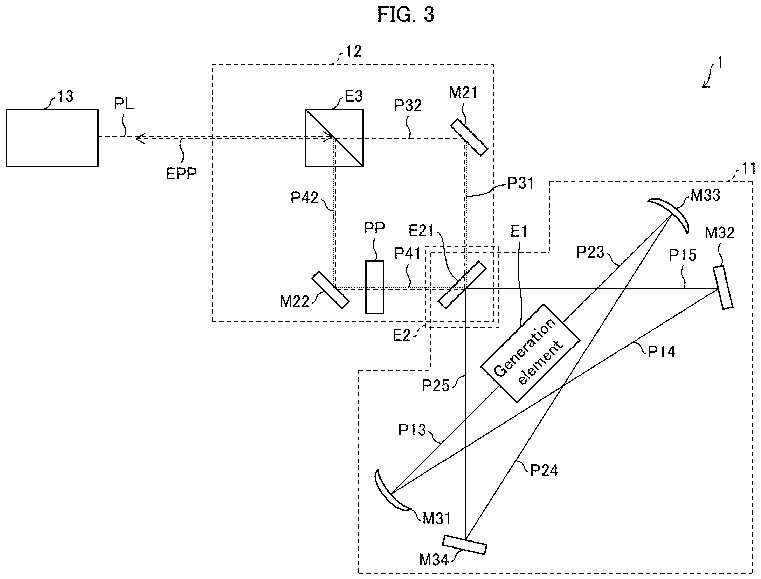

Another example (Configuration Example 2) of the specific configuration example of the quantum entangled photon pair generation device 1 will be described below with reference to Fig. 3. For convenience of description, members having the same functions as members already described are respectively given the same reference signs, and a description of those members will be omitted as appropriate.

Also in Specific Configuration Example 2 of the quantum entangled photon pair generation device 1 according to the present configuration example, the quantum entangled photon pair generation device 1 includes the resonance section 11, the interference section 12, and the pump light generation device 13. In Specific Configuration Example 2 of the present application, in addition to the configuration of Specific Configuration Example 1 shown in Fig. 2, the mirror M11 and the mirror M12 are arranged in line symmetry with the shared connection section E2 and the generation element E1 as an axis of symmetry.

Furthermore, in a suitable variation of Specific Configuration Example 2 of the quantum entangled photon pair generation device 1 according to the present configuration example, the optical path P1 and the optical path P2 of the resonance section each include m mirrors (m is an integer of 2 or more). The first optical path is formed along diagonals of an n-sided polygon by the shared connection unit E2 and the plurality of mirrors of the resonance section, and is formed in line symmetry with the shared connection section E2 and the generation element E1 arranged as an axis of symmetry thereof. Note here that n=2m+1, and n is an odd number of 5 or more. That is, in the present configuration example, the first optical path of the resonance section is formed by the shared connection section E2 and 2m mirrors. Fig. 3 shows a configuration example in the case of n=5 (m=2).

A configuration in a case where the optical path P1 and the optical path P2 of the resonance section each include one mirror is as in the case of Specific Configuration Example 1 shown in Fig. 2, and thus a detailed description thereof will be omitted. A configuration of Fig. 3 in the case of n=5 (m=2) will be described below.

### (Resonance section 11)

The resonance section 11 includes a mirror M31, a mirror M32, a mirror M33, and a mirror M34, the generation element E1, and the shared connection section E2. Note here that the shared connection section E2 is composed of the dichroic mirror E21 as in the case of Specific Configuration Example 1. The dichroic mirror has reflectance and transmittance for optically coupling the interference section 12 to the resonance section 11, as in the case of Specific Configuration Example 1.

An optical path P13 is formed between the generation element E1 and the mirror M31. An optical path P14 is formed between the mirror M31 and the mirror M32. An optical path P15 is formed between the mirror M32 and the shared connection section E2. An optical path P23 is formed between the generation element E1 and the mirror M33. An optical path P24 is formed between the mirror M33 and the mirror M34. An optical path P25 is formed between the mirror M34 and the shared connection section E2. The optical path P13, the optical path P14, the optical path P15, the mirror M31, and the mirror M32 form the optical path P1, and the optical path P23, the optical path P24, the optical path P25, the mirror M33, and the mirror M34 form the optical path P2. As a result, a loop-shaped first optical path is formed.

The mirror M31, the mirror M32, the mirror M33, the mirror M34, and the dichroic mirror E21 serving as the shared connection section have a configuration for, in order for the optical path in the resonance section 11 to be a loop-shaped optical path, directing light that propagates in the optical path. For similar reasons to those described earlier, at least one among the mirror M31, the mirror M32, the mirror M33, and the mirror M34 may be a concave mirror, or may be a toroidal-shaped mirror, and a suitable mirror can be used.

The generation element E1 is arranged between the mirror M31 and the mirror M33 and generates a two-photon state by causing spontaneous parametric down-conversion.

Configurations and operations of the interference section 12 and the loop-shaped second optical path are similar to those in the case of Specific Configuration Example 1 shown in Fig. 2, and thus a detailed description thereof will be omitted.

In the present embodiment, in the dichroic mirror E21 serving as the shared connection section E2, an angle of incidence of each of the first optical path and the second optical path is 45 degrees. This makes it possible to use mass-produced mirrors.

### (Description of operation and photon state of quantum entangled photon pair generation device 1 according to Configuration Example 2)

In the present embodiment, the optical path P1 and the optical path P2 that constitute the resonance section each include m mirrors (m is an integer of 2 or more). The first optical path that is composed of the shared connection section E2 and the plurality of mirrors of the resonance section is formed along diagonals of an n-sided polygon, and the plurality of mirrors are arranged in line symmetry with the shared connection section E2 and the generation element E1 as an axis of symmetry. As shown in Fig. 3, in a case where n=5, the mirror M31, the mirror M32, the mirror M33, the mirror M34, and the shared connection section E2 form a pentagram shape as the first optical path. The shared connection section E2 and the generation element E1 are arranged as an axis of symmetry of the pentagram shape.

According to the above configuration, light that travels from the shared connection section E2 in a first route of the first optical path (from the optical path P15 through the optical path P14 to the optical path P13) and light that travels from the shared connection section E2 in a second route of the first optical path, the second route being opposite in direction to the first route (from the optical path P25 through the optical path P24 to the optical path P23), move in line symmetry and reach the generation element E1. Thus, the light that has reached the generation element E1 from the shared connection section E2 along the first route and the light that has reached the generation element E1 from the shared connection section E2 along the second route have equal optical path lengths.

By arranging the mirror M11 and the mirror M21 in line symmetry with the shared connection section E2 and the generation element E1 as an axis of symmetry, it is possible to obtain the above effects also in the case of Specific Configuration Example 1 shown in Fig. 2 and having a triangular configuration.

Effects similar to those described in Specific Configuration Example 1 of the present invention allow a two-photon state that has been generated in the first route of the first optical path of the resonance section and a two-photon state that has been generated in the second route of the first optical path to generate quantum entangled light by an operation of the interference section 12.

In contrast, in Specific Configuration Example 2 of the present invention, z=L_cav/2 where L_cav denotes the perimeter of the first optical path in the resonance section 11, and z denotes a coordinate at which spontaneous parametric down-conversion occurs. In this case, from equation (5), a phase difference between the two-photon states is zero when θ₁=θ₂. This makes it possible to generate a Bell-state quantum entangled photon pair.

Note that the effects as described above can also be produced in a configuration in a case where one mirror is included in each of the optical path P1 and the optical path P2 of the resonance section, as shown in Fig. 2.

Furthermore, the inventors of the present invention have found that, even in a case where an area occupied by the resonance section is the same, the first optical path can have a longer optical path length in the case of a configuration shown in Fig. 3 and including a plurality of mirrors, as compared with a configuration shown in Fig. 2 and including one mirror.

Assuming here that the resonance section 11 is configured to be a regular n-sided polygon and an area of the regular n-sided polygon is S, a side length L of the regular n-sided polygon is given by the following equation: $L = \sqrt{\frac{4 S tan \left(π/n\right)}{n}}$
where, when the longest path for one circuit passing through vertices of the regular n-sided polygon once each is calculated,
in the case of a regular quadrangle, $\left(2+2\sqrt{2}\right) L = 4.82843 ∗ \sqrt{S}$
in the case of a regular pentagon, $5 ∗ 1.618 L = 6.16771 ∗ \sqrt{S}$
in the case of a regular hexagon, $\left(4∗\sqrt{3}+2∗2\right) L = 6.77989 ∗ \sqrt{S}$
and in the case of a regular heptagon, $7 ∗ 2.2469796 L = 8.25106 ∗ \sqrt{S}$ That is, the longest path length increases with respect to the same area S as n increases.

Thus, in a case where the plurality of mirrors of the resonance section 11 are arranged so as to have the longest path length, the first optical path can have a longer optical path length even if an area occupied by the resonance section 11 is the same. This makes it possible to narrow a spectral linewidth and achieve high multiplexing of a frequency mode.

A value of n, positions at which the mirrors are arranged, etc. are design matters and can be flexibly designed in accordance with an application example.

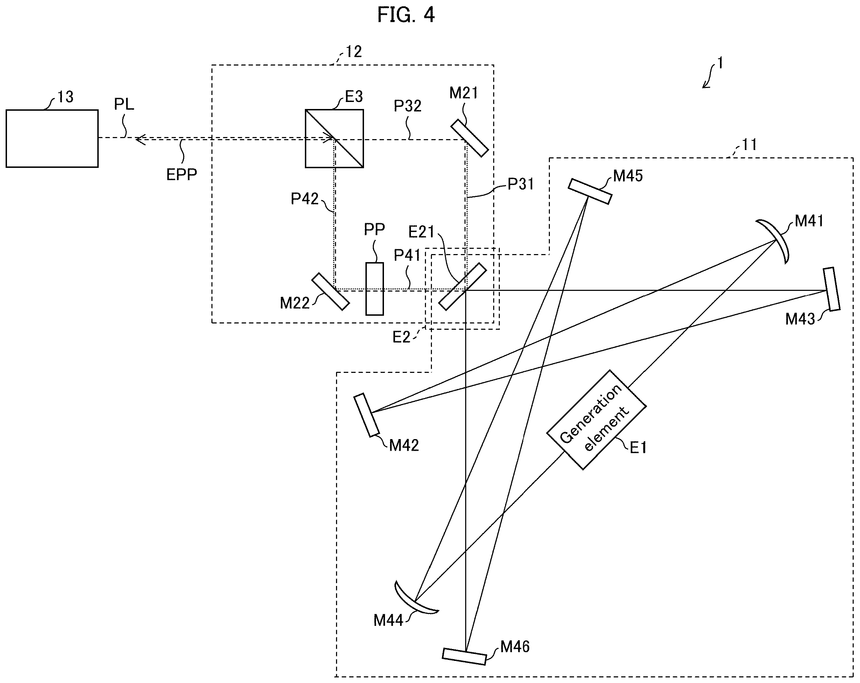

Fig. 4 is a diagram showing a second variation of Specific Configuration Example 2 in the case of n=7. In the present configuration example, the optical path P1 is configured to include a mirror M41, a mirror M42, and a mirror M43, and the optical path P2 is configured to include a mirror M44, a mirror M45, and a mirror M46. These mirrors are formed along diagonals of a heptagon and are formed in line symmetry with the shared connection section E2 and the generation element E1.

### (Effects of quantum entangled photon pair generation device 1 according to Configuration Example 2)

The quantum entangled photon pair generation device 1 according to the present Configuration Example 2 makes it possible to obtain not only the effects of Specific Configuration Example 1 shown in Fig. 2 but also the following effects. Specifically, it is possible to obtain Bell-state quantum entangled light. Furthermore, it is possible to achieve a longer resonator length in the resonance section even in a case where an area occupied by the resonance section is the same. This makes it possible to narrow a spectral linewidth and to achieve high multiplexing of a frequency mode.

### (Specific Configuration Example 3 of quantum entangled photon pair generation device 1)

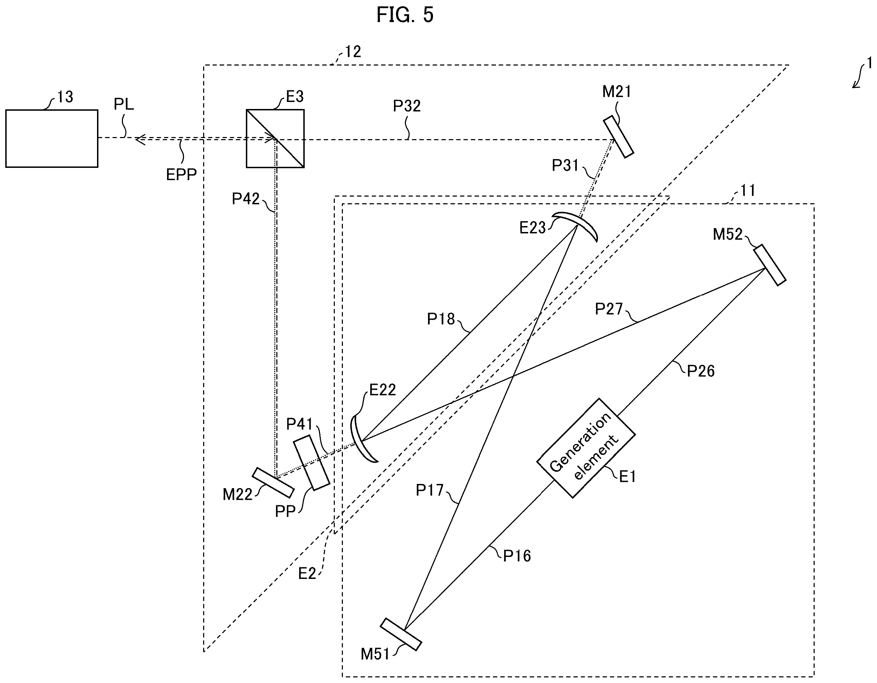

A further example (Configuration Example 3) of the more specific configuration example of the quantum entangled photon pair generation device 1 will be described below with reference to Fig. 5. For convenience of description, members having the same functions as members already described are respectively given the same reference signs, and a description of those members will be omitted as appropriate.

Also in Specific Configuration Example 3 of the quantum entangled photon pair generation device 1 according to the present configuration example, the quantum entangled photon pair generation device 1 includes the resonance section 11, the interference section 12, and the pump light generation device 13. In Specific Configuration Example 3 of the present application, unlike the configurations of Specific Configuration Example 1 and Specific Configuration Example 2 that are shown in Figs. 2, 3, and 4, the shared connection section E2 is configured to include a first dichroic mirror E22 and a second dichroic mirror E23.

### (Resonance section 11)

The resonance section 11 includes a mirror M51, a mirror M52, the generation element E1, and the shared connection section E2. As described earlier, the shared connection section E2 is configured to include two dichroic mirrors as in the case of Specific Configuration Example 1. The two dichroic mirrors have reflectance and transmittance for optically coupling the interference section 12 to the resonance section 11, as in the case of Specific Configuration Example 1. Also in the two dichroic mirrors, including a dichroic mirror that is similar to the dichroic mirror in the case of Specific Configuration Example 1, that transmits the pump light PL, and that reflects the two-photon state makes it possible to establish the resonance process in the resonance section 11 for the two-photon state without causing the resonance section 11 to resonate the pump light PL, as described earlier. In the example shown in Fig. 5, pump light beams that have been input from the optical paths P31 and P41 are transmitted to respective optical paths P17 and P27. Most of two-photon states that have been input from the optical paths P17 and P27 are reflected in opposite directions and output to an optical path P18, and some of the two-photon states flow into the respective optical paths P31 and P41.

An optical path P16 is formed between the generation element E1 and the mirror M51. An optical path P17 is formed between the mirror M51 and the second dichroic mirror E23. The optical path P18 is formed between the first dichroic mirror E22 and the second dichroic mirror E23. An optical path P26 is formed between the generation element E1 and the mirror M52. An optical path P27 is formed between the mirror M52 and the first dichroic mirror E22. The first dichroic mirror E22, the second dichroic mirror E23, and the optical path P18 that optically connects the first dichroic mirror E22 and the second dichroic mirror E23 constitute the shared connection section E2. The optical path P16, the optical path P17, and the mirror M51 form the optical path P1, and the optical path P26, the optical path P27, and the mirror M52 form the optical path P2. As a result, a loop-shaped first optical path is formed.

The mirror M51, the mirror M52, and the first dichroic mirror E22 and the second dichroic mirror E23 each serving as the shared connection section have a configuration for, in order for the optical path in the resonance section 11 to be a loop-shaped optical path, directing light that propagates in the optical path. For similar reasons to those described earlier, at least one among these mirrors may be a concave mirror, or may be a toroidal-shaped mirror, and a suitable mirror can be used.

The generation element E1 is arranged between the mirror M51 and the mirror M52 and generates a two-photon state by causing spontaneous parametric down-conversion.

Configurations and operations of the interference section 12 and the loop-shaped second optical path are similar to those in the case of Specific Configuration Example 1 shown in Fig. 2, and thus a detailed description thereof will be omitted.

### (Description of operation and photon state of quantum entangled photon pair generation device 1 according to Configuration Example 3)

In the present embodiment, the resonance section has a so-called bow-tie resonator configuration.

According to the above configuration, clockwise pump light that has been input from the optical path P31 is input to the resonance section 11 through the second dichroic mirror E23, passes through the optical path P17, the mirror M51, the optical path P16 in this order, and is input to the generation element E1. The pump light that has been input to the generation element E1 generates a two-photon state by spontaneous parametric down-conversion or the like. Light in the generated two-photon state passes through the optical path P26, the mirror M52, and the optical path P27 in this order and reaches the first dichroic mirror E22. A part of the light in the two-photon state which light has been input to the first dichroic mirror E22 is output to the optical path P41 and input to the interference section 12, and most of the remaining part of the light is output to the optical path P18. Light in the two-photon state which light is output to the optical path P18 reaches the second dichroic mirror E23. A part of the light in the two-photon state which light has been input to the second dichroic mirror E23 is output to a port (not shown in the drawings), and most of the remaining part of the light is output to the optical path P17, then passes through the optical path P17, the mirror M51, and the optical path P16 in this order, and is input again to the generation element E1. This causes the two-photon state that has been generated in the generation element E1 to exhibit resonance behavior in the resonance section 11. Note here that such an optical path is hereinafter referred to as a first-route optical path of the first optical path.

In contrast, counterclockwise pump light that has been input from the optical path P41 is input to the resonance section 11 through the first dichroic mirror E22, passes through the optical path P27, the mirror M52, and the optical path P26 in this order, and is input to the generation element E1. The pump light that has been input to the generation element E1 generates a two-photon state by spontaneous parametric down-conversion or the like. Light in the generated two-photon state passes through the optical path P16, the mirror M51, and the optical path P17 in this order and reaches the second dichroic mirror E23. A part of the light in the two-photon state which light has been input to the second dichroic mirror E23 is output to the optical path P31 and input to the interference section 12, and most of the remaining part of the light is output to the optical path P18. Light in the two-photon state which light is output to the optical path P18 reaches the first dichroic mirror E22. A part of the light in the two-photon state which light has been input to the first dichroic mirror E22 is output to a port (not shown in the drawings), and most of the remaining part of the light is output to the optical path P27, then passes through the optical path P27, the mirror M52, and the optical path P26 in this order, and is input again to the generation element E1. This causes the two-photon state that has been generated in the generation element E1 to exhibit resonance behavior in the resonance section 11. Note here that such an optical path is hereinafter referred to as a second-route optical path of the first optical path.

A two-photon state that has been generated in the first route of the first optical path of the resonance section and a two-photon state that has been generated in the second route of the first optical path are input to the interference section 12 by being output to the respective optical paths P41 and P31, and the two-photon state that has been output to the optical path P41 undergoes a 90° rotation of a polarization state by passing through the polarization rotation element PP. Thus, effects similar to those described in Specific Configuration Example 1 of the present invention allow quantum entangled light to be generated by the operation of the interference section 12 also in the present configuration example.

### (Effects of quantum entangled photon pair generation device 1 according to Configuration Example 3)

The quantum entangled photon pair generation device 1 according to the present configuration example makes it possible to obtain the following effects. That is, the effects of the present invention can also be applied to a bow-tie resonator that is a common resonator configuration.

### (Specific Configuration Example 4 of quantum entangled photon pair generation device 1)

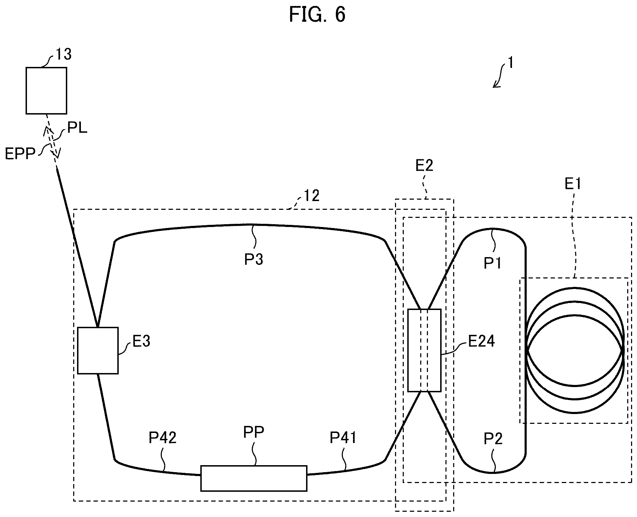

A further example (Configuration Example 4) of the more specific configuration example of the quantum entangled photon pair generation device 1 will be described below with reference to Fig. 6. For convenience of description, members having the same functions as members already described are respectively given the same reference signs, and a description of those members will be omitted as appropriate.

Fig. 6 is a diagram showing a configuration of Specific Configuration Example 4 of the quantum entangled photon pair generation device 1 according to the present configuration example. As shown in Fig. 6, also in Specific Configuration Example 4 of the quantum entangled photon pair generation device 1 according to the present configuration example, the quantum entangled photon pair generation device 1 includes the resonance section 11, the interference section 12, and the pump light generation device 13.

### (Resonance section 11)

The resonance section 11 is configured to resonate light that propagates in the resonator. As shown in Fig. 6, the resonance section 11 includes the optical path P1, the optical path P2, the generation element E1, and the shared connection section E2. The optical path P1 and the optical path P2 form a loop-shaped first optical path. In the present configuration example, the optical path P1 and the optical path P2 are composed of optical fibers. As described later in detail, in the present configuration example, the optical path P1 and the optical path P2 correspond to input/output fibers of a polarization-maintaining fiber coupler and have a length that is typically at most several meters.

The generation element E1 is a generation element that is arranged on the first optical path. In the present configuration example, as shown in Fig. 6, the generation element E1 is composed of a polarization-maintaining fiber having a sufficient length. A specific length of the polarization-maintaining fiber as the generation element E1 does not limit the present configuration example. For example, it is possible to adopt a configuration in which the polarization-maintaining fiber has a length that is 10 times or more the length of the first optical path. The length of the polarization-maintaining fiber is a value that directly affects not only brightness but also a resonator length, and a longer length increases loss but shortens a free spectral region. This makes it possible to aim at narrowing of a linewidth. The length of the polarization-maintaining fiber is limited to a beat length of the polarization-maintaining fiber at longest.

The polarization-maintaining fiber also causes a four-wave mixing process or third-order parametric down-conversion using a nonlinear optical effect of the polarization-maintaining fiber. Further, using, as the generation element E1, the polarization-maintaining fiber that has such a sufficient length makes it possible to increase a coincidence accidental ratio in the resonance section 11.

A length of the resonance section 11 (more specifically, a total length of optical paths of the resonance section 11) can be suitably determined in accordance with, for example, a required linewidth, the required number of frequency modes, and a required mode interval. Even in the case of non-degenerate wavelength, quadruple resonance of dual-polarization and dual-wavelength is not required, and double resonance at two wavelengths need only be satisfied.

### (Interference section 12)

The interference section 12 is configured to generate one or more photon pairs in a quantum entangled state from a plurality of two-photon states generated by the generation element E1. As shown in Fig. 6, the interference section 12 includes the optical path P3, the optical path P41, the optical path P42, the polarization rotation element PP, the shared connection section E2, and the input/output section E3.

The optical path P41 is an optical path between the shared connection section E2 and the polarization rotation element PP. The optical path P42 is an optical path between the polarization rotation element PP and the input/output section E3. In the present configuration example, the optical path P3, the optical path P41, and the optical path P42 are composed of optical fibers and form a loop-shaped second optical path.

The polarization rotation element PP is an optical element that is arranged on the second optical path, and rotates polarization of light that propagates in the second optical path. In the present configuration example, the polarization rotation element PP can be composed of a single twisted fiber in which an input key and an output key are orthogonal to each other.

The interference section 12 including the polarization rotation element PP makes it possible to associate a clockwise path (propagation path) and a counterclockwise path (propagation path) in the second optical path with a polarization state of a photon. Thus, a direction in which a photon has been output from the second optical path can be encoded as polarization of the photon. Furthermore, in the present configuration example, respective perimeters of the clockwise path and the counterclockwise path in the second optical path are equal, and thus a relative phase in a generated quantum entangled photon pair can be automatically stabilized.

The input/output section E3 has a configuration for causing pump light PL that is generated by the pump light generation device 13 to flow into the second optical path and for emitting a quantum entangled photon pair from the interference section 12. In the present configuration example, the input/output section E3 is composed of a polarization-splitting fiber coupler. The input/output section E3 splits the pump light PL into two beams, directs one of the split beams to circulate clockwise in the second optical path, and directs the other of the split beams to circulate counterclockwise in the second optical path.

The input/output section E3 also combines a two-photon state that propagates clockwise in the second optical path and a two-photon state that propagates counterclockwise in the second optical path, and emits the combined two-photon states as polarization-entangled light (a polarized quantum entangled photon pair) in one direction.

### (Shared connection section)

The shared connection section E2 is configured to optically connect the first optical path and the second optical path, and is, for example, shared by the resonance section 11 and the interference section 12 as described earlier. In the present configuration example, the shared connection section E2 is composed of a polarization-maintaining fiber coupler E24 having four ports (2:2 ports). Two of the four ports are connected to the respective optical paths P3 and P41, as shown in Fig. 3, and the other two (the optical paths P1 and P2) of the four ports are connected to both ends of the polarization-maintaining fiber serving as the generation element E1, as shown in Fig. 6.

Also with the quantum entangled photon pair generation device 1 configured as described above, effects similar to those described in Specific Configuration Example 1 allow the generation element E1 of the resonance section 11 to generate a plurality of two-photon states from pump light that is generated by the pump light generation device 13, and allow the interference section 12 to generate a quantum entangled photon pair from the generated plurality of two-photon states.

Also in the quantum entangled photon pair generation device 1 according to the present configuration example, the resonance process in the resonance section 11 is determined by a wavelength and/or polarization of the two-photon state that circulates in the resonance section 11, and is independent of the configuration requirements of the interference section 12 or the phase-matching condition in the generation element E1. As in the case of Configuration Example 1, it is only necessary for a wavelength of a generated two-photon state to satisfy a resonance condition for a specific polarization.

Further, as described earlier, the resonance section 11 of the quantum entangled photon pair generation device 1 has the loop-shaped first optical path that is composed of the optical path P1 and the optical path P2. This makes it possible to, while preventing or reducing any loss, achieve both the resonance process carried out by the resonance section 11 and generation of quantum entangled light by the interference section 12.

Thus, the quantum entangled photon pair generation device 1 according to the present configuration example makes it possible to further improve generation brightness of quantum entangled light than a conventional configuration. In addition, as compared with the case of Specific Configuration Example 1 of the present invention, using a long optical fiber as the generation element E1 to allow the resonance section 11 to be longer enables further narrowing of a linewidth of generated quantum entangled light.

As is conventionally known, it is possible to wind the polarization-maintaining fiber many times around, for example, a cylindrical bobbin with a diameter of several centimeters to several tens of centimeters without propagation loss of the polarization-maintaining fiber or a deterioration in polarization-maintaining property of the polarization-maintaining fiber. Thus, even in a case where a long polarization-maintaining fiber having a length of approximately 100 meters is used as the generation element E1 in order to shorten a free spectral region and narrow a linewidth, an increase in size of the device can be avoided.

### (Specific Configuration Example 5 of quantum entangled photon pair generation device 1)

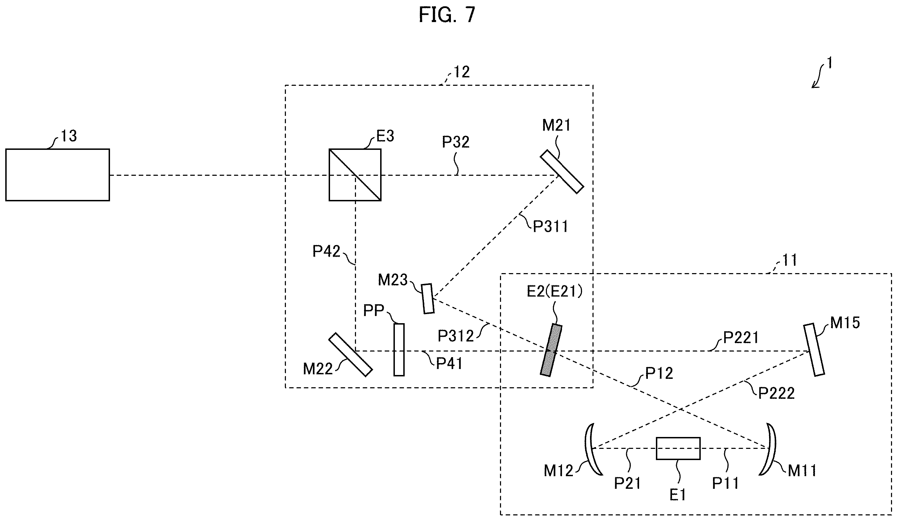

A further example (Configuration Example 5) of the more specific configuration example of the quantum entangled photon pair generation device 1 will be described below with reference to Fig. 7. For convenience of description, members having the same functions as members already described are respectively given the same reference signs, and a description of those members will be omitted as appropriate.

Fig. 7 is a diagram showing a configuration of Specific Configuration Example 5 of the quantum entangled photon pair generation device 1 according to the present configuration example. As shown in Fig. 7, also in Specific Configuration Example 5 of the quantum entangled photon pair generation device 1 according to the present configuration example, the quantum entangled photon pair generation device 1 includes the resonance section 11, the interference section 12, and the pump light generation device 13. In each of the foregoing configuration examples, a line-symmetric configuration with the shared connection section E2 and the generation element E1 as an axis of symmetry has been mainly taken as an example, but the present configuration example is an asymmetric configuration. Further, the present configuration example is an implementation example in a bow-tie structure.

In the present Specific Configuration Example 5, a mirror M23 and a mirror M15 are further provided in addition to the configuration of Specific Configuration Example 1 shown in Fig. 2. As shown in Fig. 7, the presence of the mirror M23 forms an optical path P311 between the mirror M21 and the mirror M23 and an optical path P312 between the mirror M23 and the shared connection section E2 (dichroic mirror E21). An optical path obtained by combining the optical path P311 and the optical path P312 can correspond to the optical path P31 in Specific Configuration Example 1 shown in Fig. 2. As shown in Fig. 7, the presence of the mirror M15 forms an optical path P221 between the shared connection section E2 (dichroic mirror E21) and the mirror M15 and an optical path P222 between the mirror M15 and the mirror M12. An optical path obtained by combining the optical path P221 and the optical path P222 can correspond to the optical path P22 (or the optical path P12) in Specific Configuration Example 1 shown in Fig. 2.

In the photon pair generation device 1 according to the present configuration example, the presence of the mirror M23 makes it possible to correct "diffraction spreading" associated with a difference between a clockwise path length and a counterclockwise path length in the resonance section 11. In general, in a case where there is a path length difference, beam systems of two two-photon states that finally flow into the input/output section E3 are different due to diffraction, and thus a phenomenon can occur in which fidelity of a quantum entangled state decreases due to a reduction in spatial overlap. In the photon pair generation device 1 according to the present configuration example, correcting the path length difference makes it possible to correct beam diameter mismatch derived from diffraction spreading, and to obtain an effect of improving fidelity.

### (Specific Configuration Example 6 of quantum entangled photon pair generation device 1)

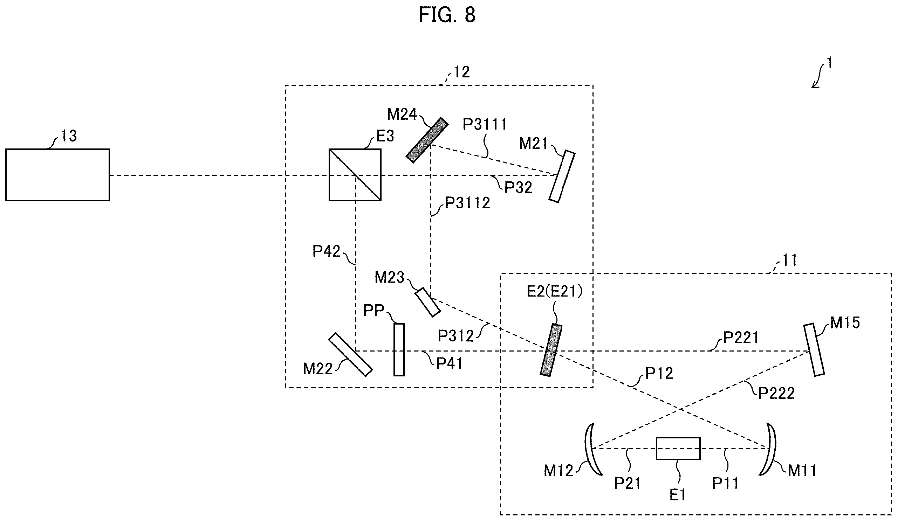

A further example (Configuration Example 6) of the more specific configuration example of the quantum entangled photon pair generation device 1 will be described below with reference to Fig. 8. For convenience of description, members having the same functions as members already described are respectively given the same reference signs, and a description of those members will be omitted as appropriate.

Fig. 8 is a diagram showing a configuration of Specific Configuration Example 6 of the quantum entangled photon pair generation device 1 according to the present configuration example. As shown in Fig. 8, also in Specific Configuration Example 6 of the quantum entangled photon pair generation device 1 according to the present configuration example, the quantum entangled photon pair generation device 1 includes the resonance section 11, the interference section 12, and the pump light generation device 13.

In the present Specific Configuration Example 6, a mirror M24 is further provided in addition to the configuration of Specific Configuration Example 5 shown in Fig. 7. As shown in Fig. 8, the presence of the mirror M24 forms an optical path P3111 between the mirror M21 and the mirror M24 and an optical path P3112 between the mirror M24 and the mirror M23. An optical path obtained by combining the optical path P3111 and the optical path P3112 can correspond to the optical path P311 in Specific Configuration Example 5 shown in Fig. 7.

In the photon pair generation device 1 according to the present configuration example, the presence of the mirror M24 allows matching of orientations of images of a clockwise path and a counterclockwise path and makes it possible to obtain an effect of further improving fidelity of a quantum entangled state.

Matching of the orientations of the images is described below. Photons of two wavelengths are generated in the generation element (nonlinear crystal) E1 (a non-degenerate state is assumed here in which two photons have different wavelengths). In this case, due to refraction, a case in which the two photons are spatially separated (e.g., "propagation toward the front right after emission in the case of a green wavelength, and propagation toward the front left after emission in the case of a yellow wavelength") may occur. In the case of such an example, an "image", the right side of which is green and the left side of which is yellow, is formed. In a case where the orientations of the images do not match, the two photons are spatially distinguishable. This can cause a problem of a decrease in fidelity. In the photon pair generation device 1 according to the present configuration example, as described earlier, the presence of the mirror M24 allows matching of orientations of images of a clockwise path and a counterclockwise path and makes it possible to obtain an effect of improving fidelity of a quantum entangled state.

### (Specific Configuration Example 7 of quantum entangled photon pair generation device 1)

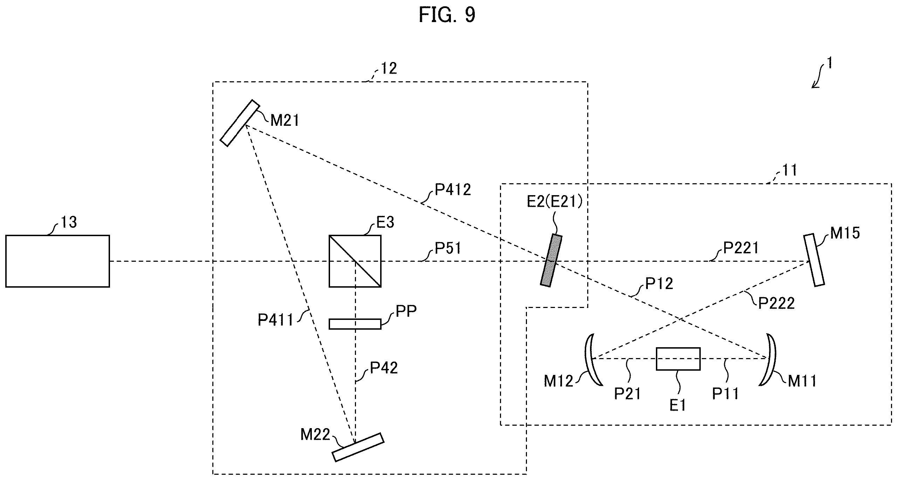

A further example (Configuration Example 7) of the more specific configuration example of the quantum entangled photon pair generation device 1 will be described below with reference to Fig. 9. For convenience of description, members having the same functions as members already described are respectively given the same reference signs, and a description of those members will be omitted as appropriate.

Fig. 9 is a diagram showing a configuration of Specific Configuration Example 7 of the quantum entangled photon pair generation device 1 according to the present configuration example. As shown in Fig. 9, also in Specific Configuration Example 7 of the quantum entangled photon pair generation device 1 according to the present configuration example, the quantum entangled photon pair generation device 1 includes the resonance section 11, the interference section 12, and the pump light generation device 13.

The present Specific Configuration Example 7 differs in configuration of the interference section 12 from Specific Configuration Example 5 shown in Fig. 7 or Specific Configuration Example 6 shown in Fig. 8. More specifically, as shown in Fig. 9, in the present configuration example, the polarization rotation element PP is arranged on the optical path P42 that is formed between the mirror M22 and the input/output section E3. Furthermore, in the present configuration example, as shown in Fig. 9, an optical path P411 is formed between the mirror M22 and the mirror M21, and an optical path P412 is formed between the mirror M21 and the shared connection section E2 (dichroic mirror E21). An optical path obtained by combining the optical path P411 and the optical path P412 can correspond to the optical path P41 in Specific Configuration Example 5 shown in Fig. 7. Note, however, that, in the present configuration example, the polarization rotation element PP is arranged on the optical path P42 as described earlier.

Moreover, in the present configuration example, as shown in Fig. 9, an optical path P51 is formed between the input/output section E3 and the shared connection section E2 (dichroic mirror E21). The optical path P51 can correspond to an optical path obtained by combining the optical path P32, the optical path P311, and the optical path P312 in Specific Configuration Example 5 shown in Fig. 7.

In the photon pair generation device 1 according to the present configuration example, the above configuration makes it possible to reduce the number of mirrors included in the interference section 12, and thus an effect of reducing cost can be obtained.

### (Specific Configuration Example 8 of quantum entangled photon pair generation device 1)

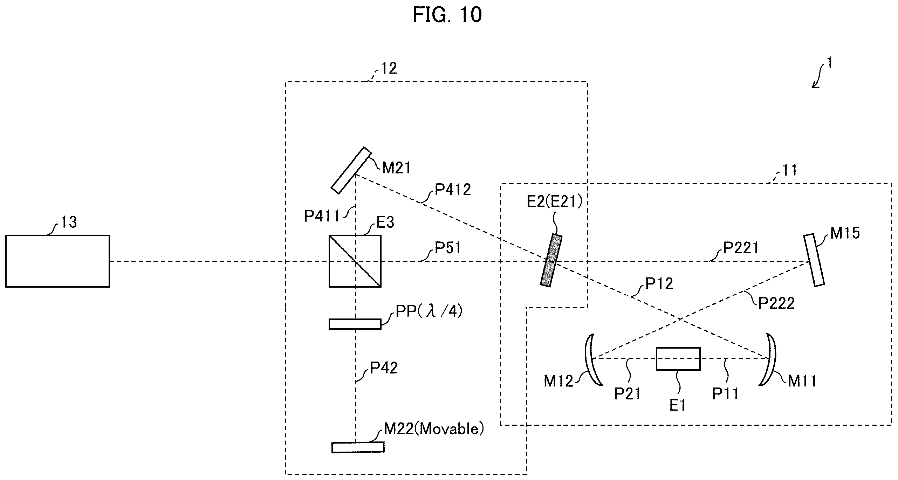

A further example (Configuration Example 8) of the more specific configuration example of the quantum entangled photon pair generation device 1 will be described below with reference to Fig. 10. For convenience of description, members having the same functions as members already described are respectively given the same reference signs, and a description of those members will be omitted as appropriate.

Fig. 10 is a diagram showing a configuration of Specific Configuration Example 8 of the quantum entangled photon pair generation device 1 according to the present configuration example. As shown in Fig. 10, also in Specific Configuration Example 8 of the quantum entangled photon pair generation device 1 according to the present configuration example, the quantum entangled photon pair generation device 1 includes the resonance section 11, the interference section 12, and the pump light generation device 13.

The present Specific Configuration Example 8 differs in configuration of the interference section 12 from Specific Configuration Example 7 shown in Fig. 9. In the present configuration example, the mirror M21 is arranged such that the optical path P42 and the optical path P411 in Specific Configuration Example 7 shown in Fig. 9 overlap. Furthermore, in the present configuration example, as the polarization rotation element PP, a configuration having a function equivalent to that of a λ/4 wave plate (quarter-wave plate) rather than a λ/2 wave plate (half-wave plate) is adopted. Moreover, in the present configuration example, the mirror M22 is arranged such that light from the input/output section E3 is vertically incident on and reflected by the mirror M22, and configuring the mirror M22 to be movable along an optical path direction enables continuous path length correction.

As described earlier, in the present configuration example, the optical path P42 and the optical path P411 are configured so as to overlap. This causes the light from the input/output section E3 to reciprocate through the polarization rotation element PP (λ/4 wave plate). Thus, the polarization rotation element PP in the present configuration example substantially operates as a λ/2 wave plate. Further, in the present configuration example, the light from the input/output section E3 is vertically incident on and reflected by the mirror M22. Thus, even in a case where the mirror M22 is moved along the optical path direction to change a path length, it is unnecessary to, for example, adjust an angle of another optical path.

### (Specific Configuration Example 9 of quantum entangled photon pair generation device 1)

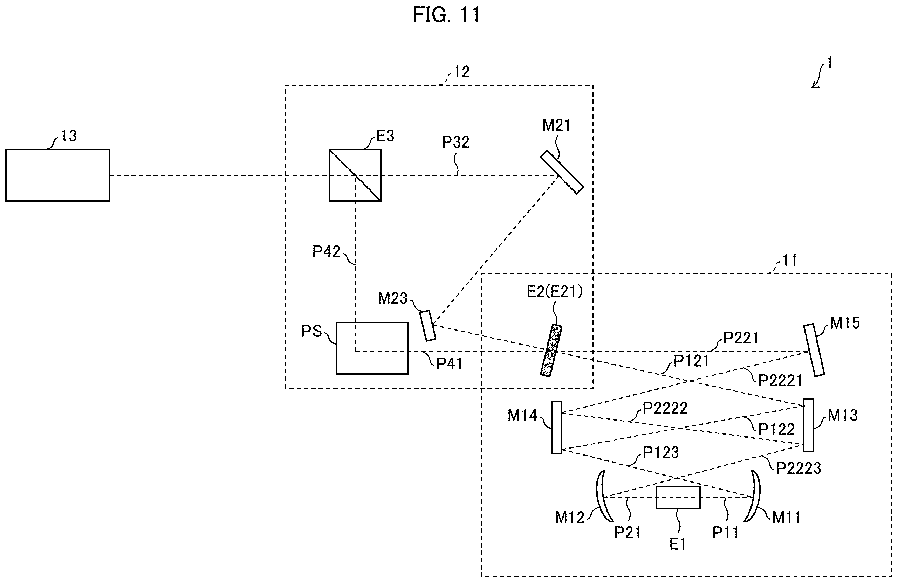

A further example (Configuration Example 9) of the more specific configuration example of the quantum entangled photon pair generation device 1 will be described below with reference to Fig. 11. For convenience of description, members having the same functions as members already described are respectively given the same reference signs, and a description of those members will be omitted as appropriate.

Fig. 11 is a diagram showing a configuration of Specific Configuration Example 9 of the quantum entangled photon pair generation device 1 according to the present configuration example. As shown in Fig. 11, also in Specific Configuration Example 9 of the quantum entangled photon pair generation device 1 according to the present configuration example, the quantum entangled photon pair generation device 1 includes the resonance section 11, the interference section 12, and the pump light generation device 13.

As shown in Fig. 11, in the present Specific Configuration Example 9, functions of the mirror M22 and the polarization rotation element PP that are included in Specific Configuration Example 5 shown in Fig. 7 are carried out by a periscope PS. As shown in Fig. 11, the resonance section 11 according to the present configuration example further includes a mirror M13 and a mirror M14 in addition to the configuration of Specific Configuration Example 5 shown in Fig. 7. The resonance section 11 including the mirror M13 causes the optical path P222 in Specific Configuration Example 5 shown in Fig. 7 to be divided into an optical path P2221 between the mirror M15 and the mirror M14, an optical path P2222 between the mirror M14 and the mirror M13, and an optical path P2223 between the mirror M13 and the mirror M12.

The resonance section 11 including the mirror M14 causes the optical path P12 in Specific Configuration Example 5 shown in Fig. 7 to be divided into an optical path P121 between the shared connection section E2 (dichroic mirror E21) and the mirror M13, an optical path P122 between the mirror M13 and the mirror M14, and an optical path P123 between the mirror M14 and the mirror M11.

In the photon pair generation device 1 according to the present configuration example, the presence of the mirror M23 makes it possible to correct "diffraction spreading" associated with a difference between a clockwise path length and a counterclockwise path length in the resonance section 11, as in the case of Specific Configuration Example 5 shown in Fig. 7.

Further, in the photon pair generation device 1 according to the present configuration example, as shown in Fig. 11, photons are incident on and reflected by different parts of the mirror M13 twice. Similarly, photons are incident on and reflected by different parts of the mirror M14 twice. Such a configuration makes it possible for the photon pair generation device 1 according to the present configuration example to offset angular instability in the resonance section 11 and to form the resonance section 11 that has higher stability.

The present invention is not limited to the embodiments, but can be altered by a skilled person in the art within the scope of the claims. The present invention also encompasses, in its technical scope, any embodiment derived by combining technical means disclosed in differing embodiments.

### (Supplementary notes)

The configurations described in the present specification can also be expressed as follows.

### (Aspect 1)

A quantum entangled photon pair generation device including:
a resonance section that has a loop-shaped first optical path and a generation element which is arranged on the first optical path and which generates a two-photon state;
an interference section that has a loop-shaped second optical path and an input/output section which is arranged on the second optical path, which receives pump light, and which outputs a quantum entangled photon pair and that generates one or more photon pairs in a quantum entangled state from a plurality of two-photon states generated by the generation element; and
a shared connection section that forms a loop-shaped optical path for each of the first optical path and the second optical path and that optically connects the first optical path and the second optical path.

### (Aspect 2)

The quantum entangled photon pair generation device according to Aspect 1, wherein in the resonance section, the plurality of two-photon states generated by the generation element satisfy a resonance condition in the resonance section.

### (Aspect 3)

The quantum entangled photon pair generation device according to Aspect 1 or 2, wherein the shared connection section includes a dichroic mirror.

### (Aspect 4)

The quantum entangled photon pair generation device according to Aspect 3, wherein the resonance section includes a plurality of mirrors that are for forming the first optical path and that have a relatively higher reflectance than the dichroic mirror.

### (Aspect 5)

The quantum entangled photon pair generation device according to Aspect 1 or 2, wherein the shared connection section includes a plurality of dichroic mirrors.

### (Aspect 6)

The quantum entangled photon pair generation device according to Aspect 5, wherein the resonance section includes a plurality of mirrors that are for forming the first optical path and that have a relatively higher reflectance than the plurality of dichroic mirrors.

### (Aspect 7)

The quantum entangled photon pair generation device according to Aspect 3 or 4, wherein a plurality of mirrors that are for forming the first optical path are arranged in line symmetry with the dichroic mirror and the generation element as an axis of symmetry.

### (Aspect 8)

The quantum entangled photon pair generation device according to any one of Aspects 3, 4, and 7, wherein the number of a plurality of mirrors that are for forming the first optical path is 2m, and the first optical path is formed along diagonals of an n-sided polygon, where m is an integer of 2 or more, and n=2m+1.

### (Aspect 9)

The quantum entangled photon pair generation device according to Aspect 8, wherein the n-sided polygon is a pentagon, and the first optical path is an optical path of a pentagram.

### (Aspect 10)

The quantum entangled photon pair generation device according to any one of Aspects 3, 4, and 7 to 9, wherein in the shared connection section, an angle of incidence of each of the first optical path and the second optical path is 45 degrees.

### (Aspect 11)

The quantum entangled photon pair generation device according to any one of Aspects 3 to 10, wherein the plurality of mirrors include a concave mirror.

### (Aspect 12)

The quantum entangled photon pair generation device according to any one of Aspects 3 to 10, wherein the plurality of mirrors include a toroidal mirror.

### (Aspect 13)

The quantum entangled photon pair generation device according to any one of Aspects 3 to 12, further including, in the first optical path of the resonance section, a lens that has a mechanism for focusing a light beam.

### (Aspect 14)

The quantum entangled photon pair generation device according to any one of Aspects 1 to 13, wherein the interference section includes a polarization rotation element that is arranged on the second optical path.

### (Aspect 15)

The quantum entangled photon pair generation device according to Aspect 14, wherein the polarization rotation element includes any of a half-wave plate, a Fresnel rhomb, and a periscope structure.

### (Aspect 16)

The quantum entangled photon pair generation device according to any one of Aspects 1 to 15, wherein the input/output section includes a beam splitter.

### (Aspect 17)

The quantum entangled photon pair generation device according to any one of Aspects 1 to 16, wherein the generation element is a nonlinear optical medium that causes second-order spontaneous parametric down-conversion.

### (Aspect 18)

The quantum entangled photon pair generation device according to Aspect 1 or 2, wherein the shared connection section includes a polarization-maintaining fiber coupler.

### (Aspect 19)

The quantum entangled photon pair generation device according to any one of Aspects 1, 2, and 18, wherein the input/output section includes a polarization-splitting fiber coupler.

### (Aspect 20)

The quantum entangled photon pair generation device according to any one of Aspects 1, 2, and 18, wherein the generation element is a polarization-maintaining fiber.

### Reference Signs List

1 Quantum entangled photon pair generation device
11 Resonance section
12 Interference section
13 Pump light generation device
E1 Generation element
E2 Shared connection section
E3 Input/output section
PL Pump light
EPP Quantum entangled light
PP Polarization rotation element
P1 to P4 Optical path
P31, P32, P41, P42, P311, P312, P3111, P3112, P411, P412, P51 Optical path of interference section 12
P11 to P18, P21 to P27, P221, P222, P121 to P123, P2221 to P2223 Optical path of resonance section 11
M11, M12, M21, M22, M31 to M34, M41 to M46, M15, M23, M24 Mirror
M51, M52 Mirror
E21, E22, E23 Dichroic mirror
E24 Polarization-maintaining fiber coupler
PS Periscope

## Claims

1. A quantum entangled photon pair generation device comprising:
a resonance section that has a loop-shaped first optical path and a generation element which is arranged on the first optical path and which generates a two-photon state;
an interference section that has a loop-shaped second optical path and an input/output section which is arranged on the second optical path, which receives pump light, and which outputs a quantum entangled photon pair and that generates one or more photon pairs in a quantum entangled state from a plurality of two-photon states generated by the generation element; and
a shared connection section that forms a loop-shaped optical path for each of the first optical path and the second optical path and that optically connects the first optical path and the second optical path.

2. The quantum entangled photon pair generation device according to claim 1, wherein in the resonance section, the plurality of two-photon states generated by the generation element satisfy a resonance condition in the resonance section.

3. The quantum entangled photon pair generation device according to claim 1 or 2, wherein the shared connection section includes a dichroic mirror.

4. The quantum entangled photon pair generation device according to claim 3, wherein the resonance section includes a plurality of mirrors that are for forming the first optical path and that have a relatively higher reflectance than the dichroic mirror.

5. The quantum entangled photon pair generation device according to claim 1 or 2, wherein the shared connection section includes a plurality of dichroic mirrors.

6. The quantum entangled photon pair generation device according to claim 5, wherein the resonance section includes a plurality of mirrors that are for forming the first optical path and that have a relatively higher reflectance than the plurality of dichroic mirrors.

7. The quantum entangled photon pair generation device according to claim 3, wherein a plurality of mirrors that are for forming the first optical path are arranged in line symmetry with the dichroic mirror and the generation element as an axis of symmetry.

8. The quantum entangled photon pair generation device according to claim 3, wherein the number of a plurality of mirrors that are for forming the first optical path is 2m, and the first optical path is formed along diagonals of an n-sided polygon, where m is an integer of 2 or more, and n=2m+1.

9. The quantum entangled photon pair generation device according to claim 8, wherein the n-sided polygon is a pentagon, and the first optical path is an optical path of a pentagram.

10. The quantum entangled photon pair generation device according to claim 3, wherein in the shared connection section, an angle of incidence of each of the first optical path and the second optical path is 45 degrees.

11. The quantum entangled photon pair generation device according to claim 4, wherein the plurality of mirrors include a concave mirror.

12. The quantum entangled photon pair generation device according to claim 4, wherein the plurality of mirrors include a toroidal mirror.

13. The quantum entangled photon pair generation device according to claim 3, further comprising, in the first optical path of the resonance section, a lens that has a mechanism for focusing a light beam.

14. The quantum entangled photon pair generation device according to claim 1 or 2, wherein the interference section includes a polarization rotation element that is arranged on the second optical path.

15. The quantum entangled photon pair generation device according to claim 14, wherein the polarization rotation element includes any of a half-wave plate, a Fresnel rhomb, and a periscope structure.

16. The quantum entangled photon pair generation device according to claim 1 or 2, wherein the input/output section includes a beam splitter.

17. The quantum entangled photon pair generation device according to claim 1 or 2, wherein the generation element is a nonlinear optical medium that causes second-order spontaneous parametric down-conversion.

18. The quantum entangled photon pair generation device according to claim 1 or 2, wherein the shared connection section includes a polarization-maintaining fiber coupler.

19. The quantum entangled photon pair generation device according to claim 1 or 2, wherein the input/output section includes a polarization-splitting fiber coupler.

20. The quantum entangled photon pair generation device according to claim 1 or 2, wherein the generation element is a polarization-maintaining fiber.
